**Europäisches Patentamt**

**European Patent Office**

**Office européen des brevets**

(19)

(11) Veröffentlichungsnummer : **0 021 219**
**B1**

(12) # EUROPÄISCHE PATENTSCHRIFT

(45) Veröffentlichungstag der Patentschrift :
13.07.83

(51) Int. Cl.³ : **H 02 K 44/06**

(21) Anmeldenummer : **80103199.8**

(22) Anmeldetag : **09.06.80**

(54) **Vorrichtung zum Fördern oder Dosieren eines Flüssigmetallstromes in einem Rohr.**

(30) Priorität : **15.06.79 DE 2924116**

(43) Veröffentlichungstag der Anmeldung :
**07.01.81 Patentblatt 81/01**

(45) Bekanntmachung des Hinweises auf die Patenterteilung : **13.07.83 Patentblatt 83/28**

(84) Benannte Vertragsstaaten :
**AT BE CH DE FR GB IT LI LU NL SE**

(56) Entgegenhaltungen :
**DE A 1 553 138**
**DE B 1 120 079**
**DE B 1 553 249**
**DE C 1 262 432**
**FR A 1 538 897**
**FR A 1 570 283**
**FR A 2 030 853**
**FR A 2 133 796**
**US A 2 931 963**
**US A 3 147 711**

**SIEMENS REVIEW, Band 44, Nr. 5, Mai 1977,
Erlangen, DE, R. HANS et al. : « Induction pumps
for liquefied metal », Seiten 211-214**

(73) Patentinhaber : **INTERATOM Internationale Atomreaktorbau GmbH
Friedrich-Ebert-Strasse
D-5060 Bergisch Gladbach 1 (DE)**

(72) Erfinder : **Barzantny, Joachim
Im Wiesengrund
D-5067 Kürten-Eichhof (DE)**
Erfinder : **Beske, Joachim, Dipl.-Phys.
Mozartstrasse 6
D-5060 Bergisch Gladbach 1 (DE)**
Erfinder : **Hans, Rainer
An der Wolfsmaar 6
D-5060 Bergisch Gladbach 3 (DE)**
Erfinder : **Laufhoff Theodor
Enrico-Fermi-Strasse 2
D-5060 Bergisch Gladbach 1 (DE)**

(74) Vertreter : **Mehl, Ernst, Dipl.-Ing. et al
Postfach 22 01 76
D-8000 München 22 (DE)**

## Vorrichtung zum Fördern oder Dosieren eines Flüssigmetallstromes in einem Rohr

Die vorliegende Erfindung betrifft eine Vorrichtung nach dem Oberbegriff des ersten Anspruches. Diese Vorrichtung dient zum Fördern oder Dosieren eines Flüssigmetallstromes in einem Rohr mit ungefähr rechteckigem Querschnitt. Sie kann als magneto-hydrodynamische Pumpe oder auch als Dosiervorrichtung zum Steuern des Austritts eines Flüssigmetalls aus einem Behälter verwendet werden. Bei erstgenannter Verwendung wird ein möglichst hoher Durchsatz angestrebt, wozu die Vorrichtung unter Umständen auch in Richtung der Schwerkraft fördert. Bei der an zweiter Stelle genannten Verwendungsart kann es erwünscht sein, den Flüssigmetallstrom zu verzögern oder ganz zum Stillstand zu bringen, wozu z. B. eine Förderleistung aufgebracht werden kann, die die Wirkung der Schwerkraft gerade aufhebt.

In der DE-B-10 28 279 wird eine Vorrichtung zum Regeln der Strömungsgeschwindigkeit von flüssigem Metall beschrieben, bei der von einer mehrphasigen regelbaren Stromquelle gespeiste elektromagnetische Spulen um das Rohr derart herumgewickelt sind, daß ihre Achsen parallel zur Strömungsrichtung im Rohr angeordnet sind. Daher können diese Spulen nur montiert werden, wenn das Rohr zumindest am einen Ende unterbrochen wird. Das ist aber bei Anlagen, die heißes Flüssigmetall fördern, unerwünscht und mit erheblichem Zeitverlust bei Reparatur oder Inspektion verbunden. In der DE-A-22 40 120 wird eine elektromagnetische Pumpe beschrieben, bei der ebenfalls die Spulenachsen parallel zur Strömungsrichtung im Rohr angeordnet sind. Damit diese Spulen ohne Unterbrechung des Rohres montiert werden können, sind innerhalb des Bereiches der Spulen ein äußeres, an einem Ende geschlossenes Rohr und ein inneres, an beiden Enden offenes Rohr angeordnet, wobei das Flüssigmetall im Ringraum zwischen den beiden Rohren hin- und im inneren Rohr zurückströmt. Zu- und Abfluß sind nur am einen Ende der Vorrichtung angeordnet, so daß die Spulen auf die Rohrleitung geschoben werden können. Nachteil dieser Anordnung ist der erhebliche hydraulische Druckverlust im Ringkanal und der zusätzliche Druckverlust bei der Änderung der Strömungsrichtung um 90° im Zulauf und von 180° am geschlossenen Ende des Außenrohres.

In der DE-B-11 20 079 ist bereits eine Einrichtung zum Regeln der Fallgeschwindigkeit eines Stromes geschmolzenen Metalls beschrieben, bei der an einem senkrechten Rohr von rechteckigem Querschnitt an seinen beiden Langseiten je ein ebenfalls senkrecht angeordneter, mehrfach gezahnter Magnetkern angeordnet ist, der 18 übereinander angeordnete elektromagnetische Spulen aufweist. Die Spulen sind auf die einzelnen Zähne des Magnetkerns gewickelt und stehen mit ihren Achsen senkrecht auf der Rohrachse. Zwischen den Spulen und dem Rohr bleibt ein freier Raum, durch den ein Luftzug hindurchgeleitet werden kann, mit dem die dem Rohr benachbarten Teile des Magnetkerns und die Isolation der Spulen gekühlt werden. Damit soll verhindert werden, daß bei Anwendung der Vorrichtung für Metalle mit hohem Schmelzpunkt eine Erhitzung der Bleche der Magnetkerne über den Curie-Punkt eintritt, obwohl die Zähne des Magnetkerns sehr nahe an das Rohr heranreichen. Der sogenannte Curie-Punkt bezeichnet diejenige Temperatur, bei der ein ansonsten magnetischer Werkstoff seine magnetische Eigenschaft verliert. Die Zähne der Magnetkerne sind an ihren dem Rohr zugewandten Enden verdickt ; damit soll das Magnetfeld längs des Kanals vergleichmäßigt und die Erwärmung der Spulen durch die vom Rohr ausgehende Wärmestrahlung herabgesetzt werden. Diese Zähne haben aber den Nachteil, daß die Spulen umständlich an Ort und Stelle auf die einzelnen Zähne gewickelt werden müssen. Die große Anzahl kleiner Spulen ergibt eine Baulänge, durch die die Vorrichtung schwer wird und durch die im Rohr verhältnismäßig große hydraulische Verluste entstehen.

Aus der US-A-2 931 963 ist auch schon ein Linearmotor bekannt, der vier kammförmige Magnetkerne aufweist, von denen zwei in einem Winkel ungleich 90° auf einen Transportkanal gerichtet sind. Diese Anordnung ist allerdings zur Förderung von Flüssigmetall nicht geeignet, da wegen der unsymmetrischen Anordnung der Magnetkerne keine gleichmäßig über den gesamten Querschnitt des Förderkanals verteilte Förderleistung erbracht werden kann. Auch sind bei der dort beschriebenen Anordnung die Spulen nicht um die Zähne der kammförmigen Magnetkerne gewickelt, sondern um die Stege, was einen nicht optimalen Verlauf der magnetischen Wanderfelder zur Folge hat. Für die möglichst verlustfreie Förderung und Dosierung von Flüssigmetall in einem Kanal ist diese Anordnung daher nicht geeignet.

Aufgabe der vorliegenden Erfindung ist eine Vorrichtung der vorstehend beschriebenen Art, die leicht und ohne das Rohr für das Flüssigmetall zu unterbrechen, montiert werden kann und deren Bauhöhe verringert ist. Dies führt zu einem geringeren hydraulischen Druckverlust, da ein großer Teil der einer magneto-hydrodynamischen Pumpe zugeführten Leistung innerhalb derselben verloren geht. Weiterhin soll eine möglichst gleichmäßig auf den Querschnitt des Förderkanals verteilte Pumpleistung erbracht werden und ein möglichst großer Wirkungsgrad erreicht werden.

Zur Lösung dieser Aufgabe wird eine Vorrichtung gemäß dem ersten Anspruch vorgeschlagen. Bei dieser Vorrichtung werden an den Längsseiten eines Rohres mit etwa rechteckigem Querschnitt vier oder mehr kammartige Magnetkerne verteilt, welche jeweils in Ebenen angeordnet sind, die unter einem Winkel ungleich 90° auf den Längsseiten des Rohres stehen. Die kammartigen Magnetkerne sind parallel zur Strömungsrichtung ausgerichtet und auf jedem Magnetkern sind n · x (n = beliebige natürliche Zahl, x = Anzahl der Wechselstromphasen) Spulen angebracht, welche jeweils an eine der Phasen einer Mehrphasen-Wechselstromquelle angeschlossen werden können. Die Ebenen, in denen die Magnetkerne angeordnet sind, liegen symmetrisch zueinander in bezug auf die Mittelebenen des Rohres. Dabei sind die Zähne so abgeschrägt, daß sie der Kontur des Rohres angepaßt sind.

Entscheidender Vorteil der vorliegenden erfindungsgemäßen Anordnung ist die Anordnung von vier oder mehr kammartigen Magnetkernen in einem Winkel ungleich 90° zu den Längsseiten des Rohres. Die schiefe Anordnung der Magnetkerne gestattet, wie weiter unten in der Beschreibung von Ausführungsbeispielen deutlich gemacht wird, die Unterbringung eines größeren Spulenvolumens und damit einer größeren Leistung der Vorrichtung, bezogen auf die in Anspruch genommene Rohrlänge. Die Größe, insbesondere, die Breite der Magnetkernzähne kann auch bei großen Anlagen im technisch realisierbaren Bereich gehalten werden. Die Strömungsgeschwindigkeit im Rohr wird außerdem vergleichmäßigt. Bei einer Beschränkung auf drei, oder unter Umständen sechs Spulen je Magnetkern (bei der wohl meistens vorzusehenden Anwendung eines Dreiphasen-Wechselstromes) benötigt die Vorrichtung nur eine geringe Rohrlänge. Dies ist z. B. auch dann wichtig, wenn bereits vorhandene Gießereianlagen mit nur beschränktem Raum zwischen Behälterausfluß und Kokille mit der erfindungsgemäßen Vorrichtung nachgerüstet werden sollen. Wichtig für eine gleichmäßige Förderleistung im gesamten Kanalquerschnitt ist auch die Symmetrie der Magnetkerne untereinander. Dazu sind die Magnetkerne in Ebenen angeordnet, welche symmetrisch zueinander liegen in bezug auf die Mittelebenen des Rohres. Aus den Ausführungsbeispielen ist zu ersehen, daß normalerweise die Ebenen der Magnetkerne sowohl symmetrisch zu einer parallel zu den Längsseiten des Rohres durch dessen Mitte liegenden Ebene sind, als auch zu einer parallel zu den Schmalseiten des Rohres durch dessen Mitte gelegten Ebene. Beide Symmetriebedingungen haben einen besonders günstigen Verlauf der Magnetfelder und damit einen guten Wirkungsgrad der Pumpe zur Folge. Die Zähne der Magnetkerne sind dabei abgeschrägt und der Kontur des Rohres angepaßt. Auf diese Weise wird der zwischen den Magnetkernen entstehende Luftspalt möglichst klein und die Verluste gering gehalten.

Im Anspruch 2 wird vorgeschlagen, die Magnetkerne aus einem Material von hoher Sättigungsinduktion und von hohem Curie-Punkt herzustellen. Diese Maßnahme ist bei elektromagnetischen Flüssigmetallpumpen im Prinzip bekannt und der Fachmann kennt die guten magnetischen Eigenschaften von beispielsweise Magnetreineisen mit einem Curie-Punkt von etwa 770 °C oder einer Eisen-Kobalt-Legierung mit einem Curie-Punkt von ca. 950 °C. Der Preis für diese Materialien ist aber sehr hoch, z. B. für eine Legierung die etwa zur Hälfte aus Eisen und zur Hälfte aus Kobalt besteht, ist er etwa um das Achtfache höher als der für normales Transformatorenblech. Außerdem ist die Verarbeitung dieses Materials wesentlich schwieriger, so daß der Fachmann bisher meist keinen Anlaß hatte, es zu verwenden. Es fand daher lediglich Anwendung, wenn selbst eine starke Kühlung zur Aufrechterhaltung der magnetischen Eigenschaften allein nicht ausreichte.

Es hat sich aber überraschenderweise herausgestellt, daß durch das vorgeschlagene Material in Kombination mit einer kompakten Anordnung der Spulenmagnetkerne gerade bei Flüssigmetallen von hoher Temperatur die Leistung einer Pumpe oder Regelvorrichtung erheblich erhöht werden kann. Dabei wird nicht nur die Leistung, bezogen auf das Bauvolumen oder die Bauhöhe vergrößert, sondern auch durch die mögliche Verringerung der Bauhöhen der innere hydraulische Widerstand erheblich reduziert. Diese Vorteile sind mit dem vorgeschlagenen Material allein oder mit der bisher bekannten Anordnung allein nicht zu erreichen. Da diese Materialien wesentlich höhere Temperaturen vertragen, ergeben sich für bestimmte Anwendungsfälle noch zusätzlich erhebliche Vorteile. In Kernenergieanlagen, die mit flüssigem Natrium von ca. 600 °C betrieben werden, kann auf eine Kühlung der Magnetkerne ganz verzichtet werden ; die Sicherheit der Anlage wird durch den Wegfall einer möglicherweise störanfälligen Kühlung erhöht. Müssen keine Passagen für ein Kühlfluid vorsehen werden, kann die Vorrichtung kompakter gebaut werden ; damit wird wiederum die Leistung erhöht.

Wie im Anspruch 3 vorgeschlagen, können für manche Anwendungsfälle benachbarte Magnetkerne in der Höhe gegeneinander versetzt werden, so daß sie ineinander geschachtelt werden können. Solche gegeneinander versetzte und ineinander greifende Magnetkerne sind wegen ihrer sehr dichten Anordnung nur noch schwer zu kühlen. Gerade aber in den Fällen, wo auf eine Kühlung wegen des hohen Curie-Punktes der Magnetkerne verzichtet werden kann, bietet sich diese vorgeschlagene Anordnung an. Die Anordnung ist besonders kompakt, und praktisch die gesamte Außenfläche des Flüssigmetallrohres wird von Magnetkernen umgeben. Dies führt zu einer Leistungssteigerung und einer besonders günstigen Förderleistung auf dem gesamten Rohrquerschnitt.

Im Anspruch 4 wird vorgeschlagen, die Pumpe so zu bauen, daß die Spulen auf drei verschiedene Weisen mit einer Dreiphasen-Wechselstromquelle verbunden werden können. Die Spulen sollen erstens in der an sich bekannten Sternschaltung schaltbar sein, mit der die höchste Förderleistung erzielt werden kann. Zweitens sollen die Spulen so schaltbar sein, daß sich die Wanderfelder teilweise gegenseitig aufheben, und drittens sollen die Spulen so schaltbar sein, daß sich die erzeugten Wanderfelder vollständig aufheben. Die Möglichkeit, diese Pumpe in allen diesen drei Schaltungsarten anzuschließen, ermöglicht einen vielfältigen Einsatz. Mit der an sich bekannten Sternschaltung läßt sich die Förderleistung der Pumpe maximieren. Die Erwärmung des geförderten Metalls durch die unvermeidlicherweise auftretenden Wirbelströme dagegen wird minimiert. Diese Schaltung eignet sich besonders für den laufenden Betrieb bei hohem Durchsatz. Die zweite, eine Dreiecksschaltung, empfiehlt sich für einen Betrieb bei verringertem Durchsatz. Ein größerer Teil der eingebrachten Energie wird in Wärme umgesetzt und dient dazu, das Flüssigmetall auf der gewünschten Temperatur zu halten, insbesondere ein Einfrieren zu verhindern. Die dritte Schaltungsform, ebenfalls eine Sternschaltung, findet Anwendung, wenn beispielsweise nach einer Betriebspause das im Rohr fest gewordene Metall wieder verflüssigt werden soll ; eine Förderung des Flüssigmetalls findet dann nicht statt, sondern die gesamte eingebrachte Energie wird zur Aufheizung verwendet.

Ausführungsbeispiele der Erfindung sind in der Zeichnung dargestellt, und zwar zeigt

Fig. 1 eine Seitenansicht und

Fig. 2 die Draufsicht eines ersten Ausführungsbeispiels der Erfindung einer. Dosiervorrichtung von geringstmöglicher Bauhöhe. Dabei sind zur Verdeutlichung in der

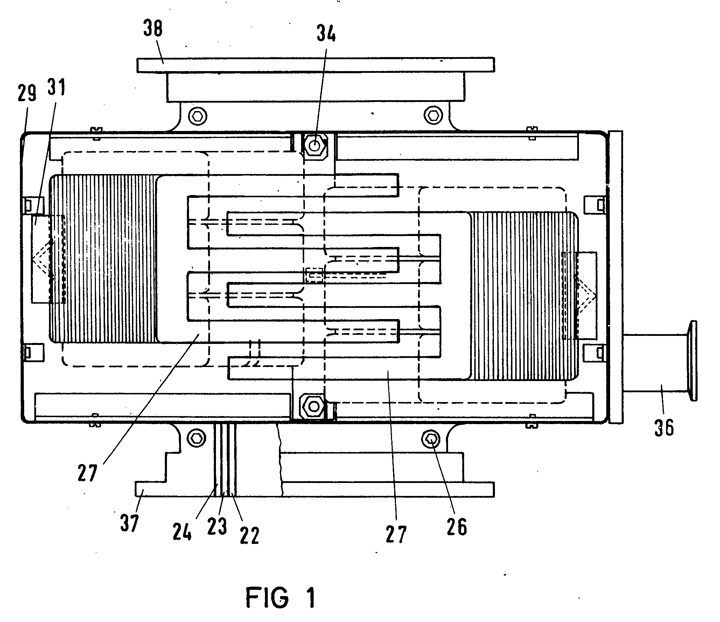

Figur 1 eine seitliche Blechverkleidung und in der

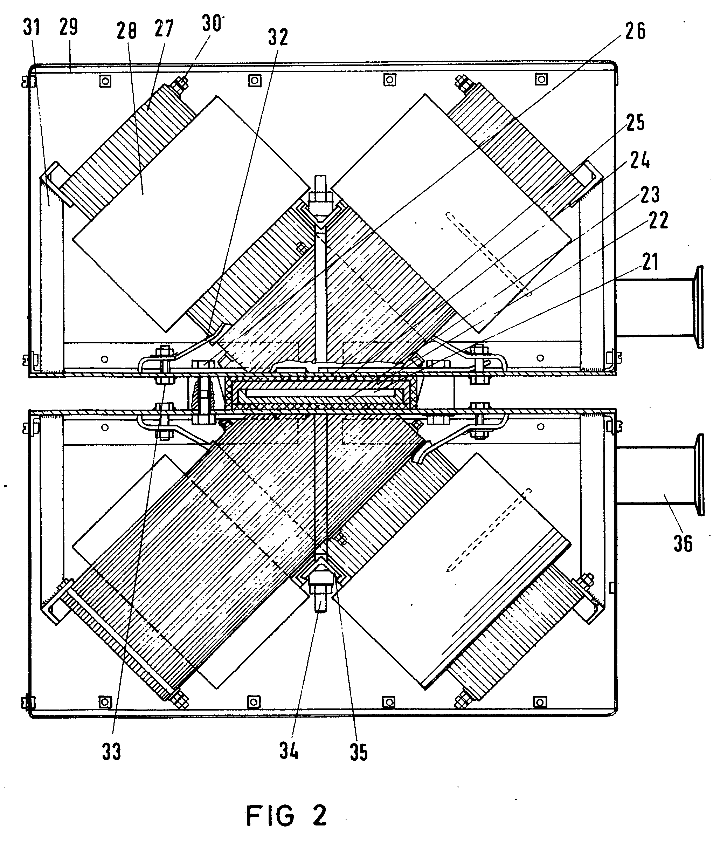

Figur 2 der obere Stutzen weggelassen.

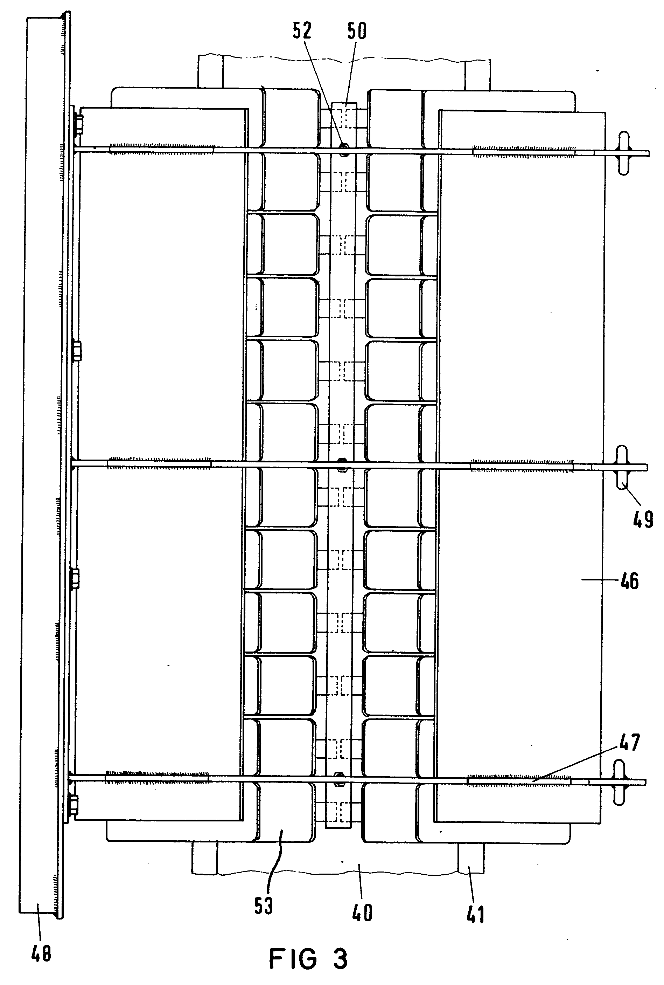

Figur 3 zeigt eine Seitenansicht und

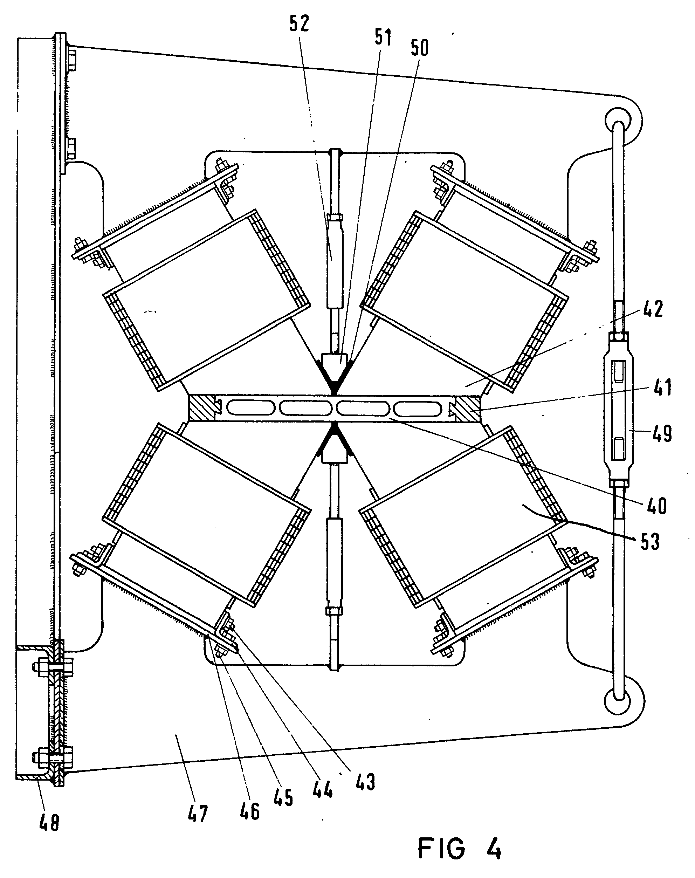

Figur 4 eine Draufsicht auf eine zweite Ausführungsform, die als Pumpe verwendet wird.

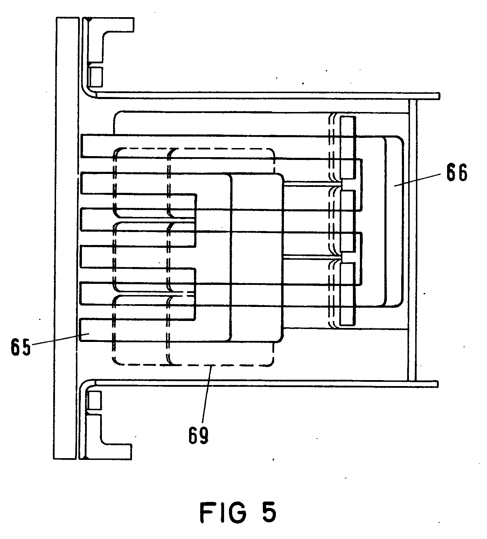

Figur 5 zeigt eine Seitenansicht und

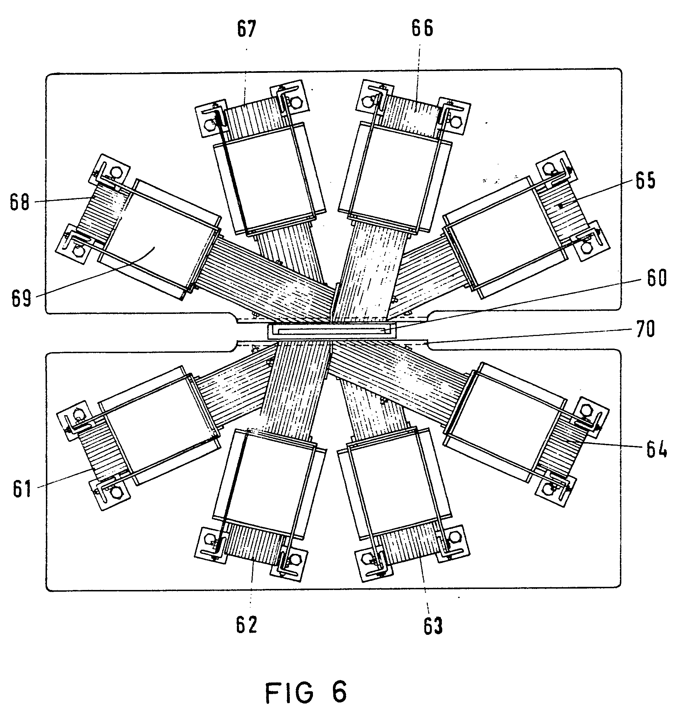

Figur 6 eine Draufsicht auf eine dritte Ausführungsform, bei der die Merkmale der ersten und zweiten Ausführungsform miteinander kombiniert werden.

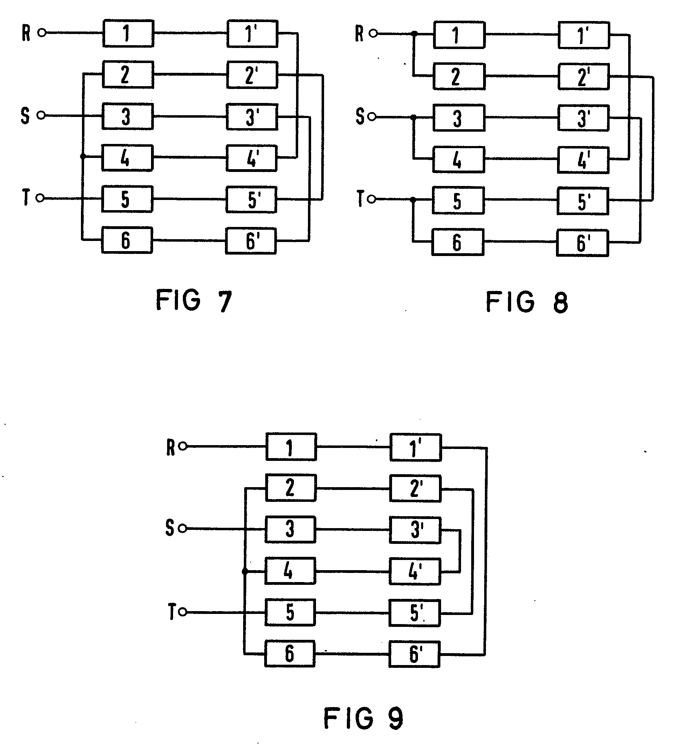

Figuren 7, 8 und 9 zeigen drei zum Betrieb der erfindungsgemäßen Vorrichtung brauchbare Schaltungsanordnungen.

Im ersten Ausführungsbeispiel (Fig. 1 und 2) wird Flüssigmetall in einem Rohr 21 mit Rechteckquerschnitt geführt, das aus zwei U-förmigen und ineinandergeschachtelten keramischen Elementen 22 und 23 besteht, die von einem Blechkasten 24 umschlossen werden. Dieser wird wiederum von zwei Blechen 25 zusammengehalten, und zwar mit Hilfe mehrerer Schrauben 26. An jeder der Blechplatten 25 sind zwei E-förmige Magnetkerne 27 befestigt und auf diesem je drei elektromagnetische Spulen 28. Diese sind in einem Blechgehäuse 29 untergebracht. Die Vorrichtung kann in zwei Hälften montiert und demontiert werden, ohne dazu das Rohr 21 öffnen zu müssen. Die Magnetkerne bestehen in bekannter Weise aus einer großen Anzahl von dünnen Blechen, die von Schrauben 30 zusammengehalten und an Haltern 31 befestigt sind. Außer mit diesen aus Winkeleisen zusammengeschweißten Haltern werden die Magnetkerne 27 noch durch gebogene Haltebleche 32 gehalten, die mit Schrauben 33 an den Blechplatten 25 befestigt sind, sowie durch Winkeleisen 35, die durch eine Schraubstange 34 zusammengehalten werden. Durch Stutzen 36 kann bei Bedarf ein Kühlgas zugeführt werden, das durch hier nicht gezeigte Schlitze im Blechmantel 29 wieder austritt. Aus der Figur 1 ist zu ersehen, daß die Magnetkerne einer Seite der Höhe nach gegeneinander versetzt sind, so daß ihre Zähne ineinandergreifen können. In der Figur 2 wird besonders deutlich, daß mit der vorgeschlagenen Anordnung bei gegebener Länge des Rohres 21 ein größeres Spulenvolumen und damit eine höhere Leistung zum Einsatz gebracht werden kann. Flansche 37, 38 dienen dem Anschluß der Vorrichtung an hier nicht gezeigte Behälter oder weiterführende Rohrleitungen.

Bei der zweiten Ausführungsform (Fig. 3 und 4) dient ein Mehrfach-Hohlprofil 40 als Rohr. An den Schmalseiten ist dieses über Schwalbenschwanznuten mit Kupferprofilen 41 verbunden, die als Rückleiter für die quer zur Rohrachse fließenden Induktionsströme dienen, wodurch Pumpleistung und Wirkungsgrad verbessert werden. Vier Magnetkerne 42, auf die je zwölf Spulen 53 gewickelt sind, sind unter einem Winkel von etwa 60° zur Oberfläche des Rohres 41 angeordnet. Die einzelnen Bleche der Magnetkerne 42 werden durch Schrauben 43 zusammengehalten, an denen Winkel 44 befestigt sind, die wiederum mit weiteren Schrauben 45 an Halteblechen 46 angeschraubt sind, die, wie aus Figur 4 ersichtlich, von jeweils drei an jeder Seite der Vorrichtung angeordneten Rahmenblechen 47 gehalten werden. Diese wiederum sind auf der einen Seite an einem Rahmen 48 aus U-Profilen befestigt und werden am anderen Ende durch Spannschrauben 49 zusammengehalten. Diese Vorrichtung kann ebenfalls leicht in zwei Hälften montiert und demontiert werden, ohne daß dazu das Rohr 40 geöffnet werden müßte. Die Magnetkerne 42 werden weiter durch Winkelprofile 50 gehalten, die durch Keile 51 angepreßt werden, die sich mit weiteren Spannschrauben 52 an den Rahmenblechen 47 abstützen. In dieser Ausführungsform sind die Zähne der einzelnen Magnetkerne 42 auf gleicher Höhe angeordnet und diese greifen nicht ineinander.

In der dritten Ausführungsform (Fig. 5 und 6) ist ein Rohr 60 von ähnlicher Konstruktion wie das weiter oben erwähnte Rohr 21 von insgesamt acht Magnetkernen 61 bis 68 umgeben, auf die je drei Spulen 69 geschoben sind. Jeweils benachbarte Magnetkerne, also die Paare 61 und 62, 63 und 64, 65 und 66 sowie 67 und 68 sind auf jeweils verschiedener Höhe angeordnet und ihre Zähne greifen ineinander. Untereinander stehen die Magnetkerne 61 und 63, 62 und 64, 65 und 67 sowie 66 und 68 auf jeweils gleicher Höhe ; sie sind dort, wo sie in der Nähe des Rohres 60 zusammentreffen entsprechend geformt. Die Befestigung der Magnetkerne geschieht ähnlich wie in den vorstehend beschriebenen Beispielen, etwa an oberen und unteren Halteblechen 70.

Die Figur 7 zeigt eine erste Schaltung der Spulen, die hier mit 1 bis 6 bzw. 1′ bis 6′ für benachbarte Magnetkerne bezeichnet sind. Dabei sind die Spulen 1, 1′ in Reihe geschaltet mit den Spulen 4′, 4 usw. Beim Austritt aus den Spulen 4, 5 und 6 sind die drei Phasen R, T und S des verwendeten Wechselstroms zu einem Sternpunkt verbunden. Diese Sternschaltung hat in Bezug auf Förderleistung den besten Wirkungsgrad.

Figur 8 zeigt die gleichen Spulen wie in der Figur 7, jedoch in einer Dreieckschaltung verbunden. Wie in der Figur 7 sind die Spulen 1, 1′ mit den Spulen 4′, 4 usw. in Reihe geschaltet. Beim Austritt aus den Spulen 2, 4 und 6 sind die drei Phasen R, S und T jedoch mit den Phasen S, T und R zu einem sogenannten Dreieck geschaltet.

In Bezug auf die Förderleistung hat diese Schaltung einen geringeren Wirkungsgrad, dafür aber eine höhere Heizleistung, was beim Betrieb der Vorrichtung mit geringem Durchsatz von Interesse sein kann, um die Wärmeverluste an die Umgebung auszugleichen und so das flüssige Metall in der Rohrleitung vor dem Erstarren zu bewahren.

Die Figur 9 schließlich zeigt eine Sternschaltung, bei der sich die erzeugten Wanderfelder gegenseitig aufheben. Die Förderleistung ist daher gleich Null und die gesamte zugeführte Energie wird in Wärme umgesetzt, was beispielsweise dazu dienen kann, das im Rohr erstarrte Metall zu verflüssigen.

## Ansprüche

1. Vorrichtung zum Fördern oder Dosieren eines Flüssigmetallstromes in einem Rohr (21, 40, 60) mit etwa rechteckigem Querschnitt mittels magnetische Wanderfelder erzeugender elektromagnetischer Spulen (28, 53, 69), die jeweils an eine der Phasen (R, S, T) einer Mehrphasen-Wechselstromquelle angeschlossen sind und auf den in Richtung des Rohres (21, 40, 60) zeigenden Zähnen mehrerer kammartig geschlitzter, an den beiden Längsseiten des Rohres (21, 40, 60) gruppierter und parallel zur Strömungsrichtung ausgerichteter Magnetkerne (27, 42, 61-68) angeordnet sind, wobei auf jedem Magnetkern (27, 42, 61-68) n · x (n= beliebige natürliche Zahl, x = Anzahl der Wechselstromphasen), Spulen (28, 53, 69) angebracht sind, gekennzeichnet durch folgende Merkmale :

a) Die elektromagnetischen Spulen (28, 53, 69) sind auf vier oder mehr kammartige Magnetkerne (27, 42, 61-68) verteilt, welche jeweils in Ebenen angeordnet sind, die unter einem Winkel ungleich 90° auf den Längsseiten des Rohres (21, 40, 60) stehen.

b) Die Ebenen, in denen die Magnetkerne angeordnet sind, liegen symmetrisch zueinander in bezug auf die Mittelebenen des Rohres (21, 40, 60).

c) Die Zähne der Magnetkerne (27, 42, 61-68) sind abgeschrägt und der Kontur des Rohres (21, 40, 60) angepaßt.

2. Vorrichtung nach Anspruch 1, gekennzeichnet durch folgendes Merkmal :

Die Magnetkerne (27, 42, 61-68) bestehen aus einem Material von hoher Sättigungsinduktion und von hohem Curie-Punkt.

3. Vorrichtung nach Anspruch 2, gekennzeichnet durch folgendes Merkmal :

Die Zähne benachbarter Magnetkerne (27, 61-68) sind der Höhe nach gegeneinander versetzt und greifen ineinander.

4. Vorrichtung nach einem oder mehreren der vorhergehenden Ansprüche, gekennzeichnet durch folgende Merkmale :

a) Die Spulen (1-6, 1′-6′) sind in einer ersten Form schaltbar, in der sich die erzeugten Wanderfelder in der einen Richtung addieren (Fig. 7).

b) Die Spulen (1-6, 1′-6′) sind in einer zweiten Form schaltbar, in der sich die erzeugten Wanderfelder zu einem größeren Teil in der einen, zu einem geringeren Teil in der anderen Richtung addieren (Fig. 8).

c) Die Spulen (1-6, 1′-6′) sind in einer dritten Form schaltbar, in der sich die erzeugten Wanderfelder je zur Hälfte in der einen und der anderen Richtung addieren (Fig. 9).

## Claims

1. Apparatus for conveying or dispensing a stream of liquid metal through a pipe (21, 40, 60) of approximately rectangular cross-section by means of electromagnetic coils (28, 53, 69) which produce travelling magnetic fields and which are respectively connected to one of the phases (R, S, T) of a polyphase alternating current source, and are arranged on the teeth of a plurality of magnetic cores (27, 42, 61-68) which are slotted like a comb, and which teeth point in the direction of the pipe (21, 40, 60), and which coils are grouped at the two long sides of the pipe (21, 40, 60) and are aligned so as to be parallel to the direction of flow, n · x coils (28, 53, 69) (n = an arbitrary natural number, x = number of alternating current phases) being arranged on each magnetic core (27, 42, 61-68), characterised by the following features :

a) the electromagnetic coils (28, 53, 69) are distributed between four or more comb-shaped magnetic cores (27, 42, 61-68) which are arranged in planes lying at an angle which is not equal to 90° relative to the long sides of the pipe (21, 40, 60) ;

b) the planes in which the magnetic cores are arranged lie symmetrically to one another relative to the median planes of the pipe (21, 40, 60) ;

c) the teeth of the magnetic cores (27, 42, 61-68) are bevelled and conform with the contour of the tube (21, 40, 60).

2. Apparatus according to Claim 1, characterised by the following feature :

the magnetic cores (27, 42, 61-68) consist of a material which has a high saturation induction and a high Curie-point.

3. Apparatus according to Claim 2, characterised by the following feature :

the teeth of adjacent magnetic cores (27, 61-68) are staggered in height relative to one another and engage in one another.

4. Apparatus according to one or more of the preceding Claims, characterised by the following features :

a) the coils (1-6, 1'-6') can be connected in a first form in which the travelling fields generated are added in one direction (Fig. 7) ;

b) the coils (1-6, 1'-6') can be connected in a second form in which the travelling fields generated are for the main part added in one direction and to a lesser extent in the other direction (Fig. 8) ;

c) the coils (1-6, 1'-6') can be connected in a third form in which the travelling fields generated are added half in one direction and half in the other (Fig. 9).

**Revendications**

1. Dispositif pour transporter ou pour doser un courant de métal liquide dans un tuyau (21, 40, 60) de section droite sensiblement rectangulaire au moyen de bobines (28, 53, 69) électromagnétiques créant des champs magnétiques mobiles et qui sont raccordées respectivement à l'une des phases (R, S, T) d'une source de courant alternatif polyphasé et qui sont disposées sur les dents, dirigées vers le tuyau (21, 40, 60), de plusieurs noyaux magnétiques (27, 42, 61 à 68) fendus à la manière d'un peigne, groupés sur les deux côtés longitudinaux du tuyau (21, 40, 60) et dirigés parallèlement au sens d'écoulement, n · x (n = nombre naturel quelconque, x = nombre de phases du courant alternatif) bobines (28, 53, 69) étant montées sur chaque noyau magnétique (27, 42, 61 à 68), remarquable par les caractéristiques suivantes :

a) les bobines électromagnétiques (28, 53, 69) sont réparties sur quatre noyaux magnétiques (27, 42, 61 à 68) ou davantage du type à peigne, qui sont disposés respectivement dans des plans faisant avec les côtés longitudinaux du tuyau (21, 40, 60) un angle différent de 90°.

b) Les plans, dans lesquels les noyaux magnétiques sont disposés, sont symétriques l'un de l'autre par rapport aux plans médians du tuyau (21, 40, 60).

c) Les dents des noyaux magnétiques (27, 42, 61 à 68) sont biseautées et adaptées au contour du tuyau (21, 40, 60).

2. Dispositif selon la revendication 1, remarquable par la caractéristique suivante :

les noyaux magnétiques (27, 42, 61 à 68) sont en un matériau ayant une induction de saturation élevée et un point de Curie élevé.

3. Dispositif selon la revendication 2, remarquable par la caractéristique suivante :

les dents de noyaux magnétiques adjacents (27, 61 à 68) sont décalées mutuellement en hauteur et sont interdigitées.

4. Dispositif selon l'une ou plusieurs des revendications précédentes, remarquable par les caractéristiques suivantes :

a) les bobines (1 à 6, 1' à 6') peuvent être reliées suivant une première façon, dans laquelle les champs mobiles créés dans un sens s'additionnent (figure 7).

b) Les bobines (1 à 6, 1' à 6') peuvent être reliées suivant une deuxième façon, dans laquelle les champs mobiles créés s'additionnent pour une assez grande partie dans un sens et pour une partie plus faible dans l'autre sens (figure 8).

c) Les bobines (1 à 6, 1' à 6') peuvent être reliées suivant une troisième façon, dans laquelle les champs mobiles créés s'additionnent respectivement pour la moitié dans l'un et dans l'autre sens.

FIG 1

0 021 219

FIG 2

FIG 3

FIG 4

FIG 5

FIG 6

FIG 7

FIG 8

FIG 9